(19) Europäisches Patentamt
European Patent Office
Office européen des brevets

(11) **EP 2 555 634 B1**

(12) **FASCICULE DE BREVET EUROPEEN**

(45) Date de publication et mention
de la délivrance du brevet:
**09.03.2016 Bulletin 2016/10**

(21) Numéro de dépôt: **11730352.9**

(22) Date de dépôt: **08.04.2011**

(51) Int Cl.:
***A23J 3/14*** *(2006.01)*    ***A23L 33/17*** *(2016.01)*

(86) Numéro de dépôt international:
**PCT/FR2011/050796**

(87) Numéro de publication internationale:
**WO 2011/124862 (13.10.2011 Gazette 2011/41)**

(54) **PROCEDE DE FABRICATION DE PROTEINES VEGETALES SOLUBLES ET FONCTIONNELLES, PRODUITS OBTENUS ET UTILISATIONS**

VERFAHREN ZUR HERSTELLUNG LÖSLICHER UND FUNKTIONELLER PFLANZENPROTEINE, DADURCH ERHALTENE PRODUKTE UND VERWENDUNGEN

PROCESS FOR MANUFACTURING SOLUBLE AND FUNCTIONAL PLANT PROTEINS, PRODUCTS OBTAINED AND USES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.04.2010 FR 1052702**

(43) Date de publication de la demande:
**13.02.2013 Bulletin 2013/07**

(73) Titulaire: **ROQUETTE FRERES**
**62136 Lestrem (FR)**

(72) Inventeurs:
• **DHALLEINE, Claire**
  **F-60200 Compiègne (FR)**
• **PASSE, Damien**
  **F-59500 Douai (FR)**

(74) Mandataire: **Gallois, Valérie et al**
**Cabinet BECKER & ASSOCIES**
**25, rue Louis Le Grand**
**75002 Paris (FR)**

(56) Documents cités:
**EP-A2- 0 352 062    FR-A2- 2 202 652**
**US-A- 4 371 562    US-A- 4 530 788**

EP 2 555 634 B1

**Description**

DOMAINE DE L'INVENTION

La présente invention a pour objet un procédé de fabrication de protéines végétales solubles et fonctionnelles et, par conséquent, plus aptes à être utilisées dans des compositions alimentaires.

ART ANTERIEUR

Les besoins quotidiens de protéines sont compris entre 12 et 20% de la ration alimentaire. Ces protéines sont fournies aussi bien par des produits d'origine animale (viandes, poissons, oeufs, produits laitiers) que par des aliments végétaux (céréales, légumineuses, algues).

Cependant, dans les pays industrialisés, les apports en protéines sont majoritairement sous la forme de protéines d'origine animale. Or, de nombreuses études démontrent qu'une consommation excessive de protéines d'origine animale au détriment des protéines végétales est une des causes d'augmentation de cancers et maladies cardio-vasculaires.

Par ailleurs, les protéines animales présentent beaucoup de désavantages, tant sur le plan de leur allergénicité, concernant notamment les protéines issues du lait ou des oeufs, que sur le plan environnemental en relation avec les méfaits de l'élevage intensif.

Ainsi, il existe une demande croissante des industriels pour des composés d'origine végétale possédant des propriétés nutritionnelles et fonctionnelles intéressantes sans pour autant présenter les inconvénients de composés d'origine animale.

Les composés d'origine végétale dont il est question dans la présente demande peuvent être issus d'oléagineux, de légumineuses, de céréales ou de féculents par réduction ou élimination de certains des principaux constituants non protéiques (eau, huile, fibres, minéraux, amidon et autres glucides) de manière à obtenir une teneur protéique ($N_{6,25}$) de 60% ou plus. La teneur protéique - est calculée sur la base du poids sec à l'exclusion des vitamines et des sels minéraux.

Les matières protéiques végétales sont de plus en plus utilisées dans les applications alimentaires. Cela nécessite que ces matières protéiques aient non seulement des propriétés nutritionnelles satisfaisantes, mais aussi une flaveur et des propriétés fonctionnelles acceptables, par exemple une bonne solubilité ainsi que des caractéristiques adéquates d'émulsion, de gélification, de rétention d'eau, de moussage et de texturation. D'une manière générale, l'expression « propriétés fonctionnelles » des ingrédients alimentaires signifie toute propriété non nutritionnelle. Ces diverses propriétés contribuent à l'obtention des caractéristiques finales désirées de l'aliment.

Le choix des procédés de préparations des compositions protéiques végétales influence directement les propriétés moussante, émulsionnante, émulsifiante ou gélifiante de.s compositions protéiques obtenues. Par exemple, concernant les protéines du lait (caséines, caséinates), les propriétés fonctionnelles des protéines du lactosérum peuvent être améliorées en modifiant le milieu (électrodialyse, ultrafiltration, échange d'ions), en dénaturant par voie thermique à pH neutre ou acide, en batch ou par des traitements en continu (échangeurs à surface raclée, cuisson-extrusion). Ces traitements, en particulier le traitement thermique (Klepacka et al. Effect of heat treatment on chemically modified proteins of legume seeds. Food chem. 1997; 58: 219-22), entraînent une dénaturation des protéines natives. Une telle dénaturation des protéines natives peut aboutir à un dépliement total de la molécule. La présence d'eau favorise la dénaturation. Ainsi, dans un système présentant une phase hydrophile et une phase hydrophobe les protéines dénaturées sous l'action de la température vont venir se placer à l'interface hydrophile/hydrophobe. La dénaturation des protéines modifie donc leurs propriétés, induisant en particulier une baisse de la solubilité par démarquage de groupes hydrophobes.

Pour l'aspect clef de la solubilité dans l'eau des compositions protéiques, les protéines natives sont généralement hydrolysées ou protéolysées afin d'augmenter leur solubilité.

Par ailleurs, l'industrie recherche une simplification des procédés de fabrication des produits protéiques qui se traduit notamment par une limitation des temps de fabrication des produits et une réduction des coûts. Toutefois, une telle simplification des procédés de fabrication ne doit altérer ni la texture, ni les propriétés fonctionnelles, nutritionnelles, sensorielles et organoleptiques des compositions protéiques.

Le principal objectif de la présente invention est donc de trouver un procédé simple et peu coûteux pour la fabrication de protéines végétales solubles et présentant de bonnes capacités émulsionnante, émulsifiante et gélifiante, destinées à être utilisées dans une grande variété de compositions, alimentaires ou non.

Diverses tentatives ont déjà été faites pour atteindre un tel objectif. En particulier, la protéolyse enzymatique directe de protéines naturelles est décrite dans les brevets US 2 489 208 et US 3 889 001. Ce procédé utilise normalement de faibles taux d'enzymes pendant des durées prolongées de réaction. Le rendement en protéines fonctionnelles solubles dans ces procédés est ordinairement faible et le produit est de qualité médiocre en ce qui concerne sa flaveur.

Un traitement enzymatique d'une protéine préalablement traitée à la chaleur a été décrit dans les brevets US 3 857 966 et 3 876 806. Dans le premier de ces brevets, une protéine précipitée à la chaleur et séparée est initialement soumise à une hydrolyse alcaline à température élevée puis à une hydrolyse protéolytique en série qui utilise à la fois une protéase microbienne alcaline et neutre et une protéase végétale provenant de graines, débarrassée des matières grasses. Ladite protéine est donc initialement traitée à la chaleur pour détruire les cellules végétatives et soumise ensuite à une protéolyse enzymatique pour former une protéine soluble. La séparation des matières insolubles dans l'eau est effectuée après plutôt qu'avant la protéolyse et le produit contient donc non seulement la protéine soluble, mais également des impuretés hydrosolubles présentes dans la matière utilisée comme source de protéine.

Par ailleurs, le problème devient encore plus délicat lorsqu'il s'agit d'appliquer le procédé de fonctionnalisation à des protéines végétales substantiellement non dénaturées présentant une teneur en protéines supérieure à 60% sur sec, une matière sèche supérieure à 15% et une viscosité à 20°C supérieure ou égale à 10000 mPa.s.

Le brevet EP 0 013 093 décrit un procédé dans lequel la solubilité de protéines de soja est améliorée par un traitement à une température élevée (de 50°c à 150°C) et à un pH compris entre 6,5 et 9. Une haute force de cisaillement et une pression élevée sont nécessaires dans ce procédé qui est caractérisé par des cycles pression/cavitation successifs. Une telle force de cisaillement induit une dénaturation protéique importante qui correspond à la désorganisation de la structure spatiale des protéines. Les chaînes polypeptidiques constituant les protéines sont alors partiellement ou totalement dépliées. Une telle force de cisaillement peut induire également une rupture des liaisons covalentes, en particulier des liaisons peptidiques. Les chaînes polypeptidiques constituant les protéines sont alors partiellement ou totalement clivées.

La demande FR 2 202 652 décrit un procédé de traitement thermique dénaturant applicable à des suspensions protéiques de faibles concentrations (6 à 8% de protéines en poids). Ledit traitement dénaturant est suivi d'une hydrolyse enzymatique pour obtenir des polypeptides dissous.

Un traitement thermique « haute température (80°C à 95°C) temps long (1 à 120 minutes) » a été décrit dans le brevet EP 0 522 800 afin de produire des protéines à la fonctionnalité améliorée. Lesdites protéines présentent notamment une très bonne capacité émulsifiante mais une piètre solubilité dans l'eau.

Le brevet US 4 530 788 décrit également un traitement thermique « haute température (70°C à 121°C) temps long (15 à 45 minutes) » permettant une fonctionnalisation de protéines végétales. Cependant, un tel traitement est appliqué à des solutions protéiques présentant une faible matière sèche (environ 5 à 10%, préférentiellement 3,5 à 9,5%). Ce document divulgue par ailleurs que le temps de chauffage maximum dépend de la concentration protéique. En regard de ce document, il va donc à l'encontre d'un préjugé technique d'imaginer un procédé de fonctionnalisation de protéines de très faible durée et applicables à des extraits protéiques de haute matière sèche, notamment de matière sèche supérieure à 15% en poids.

De tout ce qui précède, il résulte qu'il existe un besoin non satisfait de disposer de protéines végétales substantiellement non dénaturées présentant une teneur en protéines supérieure à 60% sur sec et une matière sèche supérieure à 90% ainsi qu'une bonne solubilité dans l'eau, i.e. supérieure à 500 g/l soit 50% (exception faite des protéines de pommes de terre pour laquelle une bonne solubilité correspond à une solubilité supérieure à 250 g/l soit 25%), et des propriétés fonctionnelles remarquables, telles que leurs capacités émulsionnante, émulsifiante et gélifiante.

RESUME DE L'INVENTION

Il est du mérite de la Société Demanderesse d'avoir découvert que des protéines végétales substantiellement non dénaturées pouvaient présenter, de façon surprenante, à la fois une bonne solubilité dans l'eau et de bonnes propriétés fonctionnelles. De manière inattendue, la Société Demanderesse a également découvert que le procédé de fabrication de protéines végétales solubles et fonctionnelles pouvait être appliqué à des extraits protéiques ayant une teneur élevée en protéines, une haute matière sèche et une viscosité importante.

La Société Demanderesse a réussi à concilier tous ces objectifs réputés jusqu'alors difficilement compatibles, en proposant un procédé de fabrication de protéines végétales solubles et fonctionnelles caractérisé en ce qu'il comprend au moins une étape de fonctionnalisation consistant en un traitement de 0,01 à 1s constitué de :

- une étape de chauffage de protéines végétales solubles présentant une matière sèche supérieure à 15% en poids à une température de 100°C à 160°C;
- une étape de refroidissement desdites protéines végétales chauffées.

L'invention concerne également un procédé de transformation de protéines végétales non fonctionnelles en protéines végétales fonctionnelles caractérisé en ce qu'il comprend au moins une étape de fonctionnalisation consistant en un traitement de 0,01 à 1s tel que décrit ci-dessus.

La présente invention a encore pour objet des protéines végétales caractérisées en ce qu'elles présentent :

- une solubilité dans l'eau, mesurée selon un test A, supérieure à 50%, préférentiellement comprise entre 55% et 95% ;
- une capacité émulsionnante, mesurée selon un test C, comprise entre 700 000 mPa.s et 1 200 000 mPa.s, préfé-

3

rentiellement entre 750 000 mPa.s et 1 200 000 mPa.s pour un échantillon directement placé à 4°C durant 24h et comprise entre 500 000 mPa.s et 1 100 000 mPa.s pour un échantillon traité à 75°C puis placé à 4°C durant 24h ;
- une capacité émulsifiante, mesurée selon un test B, comprise entre 70% et 95%.

La présente invention a également pour objet des protéines de pommes de terre caractérisées en ce qu'elles présentent :

- une solubilité dans l'eau supérieure à 25% ;
- une capacité émulsionnante, mesurée selon un test C, comprise entre 400 000 mPa.s et 600 000 mPa.s pour un échantillon directement placé à 4°C durant 24h et comprise entre 500 000 mPa.s et 1 100 000 mPa.s pour un échantillon traité à 75°C puis placé à 4°C durant 24h ;
- une capacité émulsifiante, mesurée selon un test B, comprise entre 70% et 95%.

En outre, la présente invention a pour objet une composition caractérisée en ce qu'elle comprend au moins une protéine végétale obtenue selon le procédé de l'invention ou présentant les caractéristiques de solubilité, de capacités émulsionnante et émulsifiante selon l'invention. Cette composition selon l'invention est destinée tout particulièrement à être utilisée dans des produits alimentaires pour l'homme et l'animal mais également pour toute utilisation dans des domaines aussi diversifiés que la pharmacie, la cosmétique, l'agrochimie, les matériaux de construction, les colles adhésives ainsi que celui des papiers-cartons.

La présente invention comprend donc aussi l'utilisation de protéines végétales solubles et fonctionnelles conformes à la présente invention dans les divers domaines techniques précédemment cités et, en particulier, dans la fabrication d'aliments. Plus particulièrement, les protéines végétales selon l'invention pourront être utilisées dans la fabrication d'aliments pour animaux aussi bien que d'aliments pour l'homme, notamment dans le domaine de l'alimentation infantile, mais également dans des domaines tels que la fermentation et l'élaboration d'excipients.

DESCRIPTION DETAILLEE

La présente invention est relative à un procédé de fabrication d'une protéine végétale soluble et fonctionnelle. Ledit procédé est caractérisé en ce qu'il comprend au moins une étape de fonctionnalisation consistant à chauffer des protéines végétales natives, préalablement mises en suspension, à une température de 100°C à 160°C puis à refroidir rapidement lesdites protéines végétales chauffées de manière à ce que l'étape de fonctionnalisation n'excède pas une seconde. De manière préférée, lesdites protéines mises en oeuvre, sous forme d'un extrait protéique, présentent une teneur en protéines ($N_{6,25}$)supérieure à 60% sur sec, une matière sèche supérieure à 15% et une viscosité à 20°C $\pm$ 22°C, mesurée selon le test E, comprise entre 10 000 mPa.s et 100 000 mPa.s.

Dans la présente invention, la teneur en protéines ($N_{6,25}$) est déterminée par dosage de la fraction azotée soluble selon la méthode de Dumas A., 183, Annales de chimie et de physique, n°2.47, pp 198-213, comme cité par Buckee, 1994, dans Journal of the Institute of Brewing, 100, pp 57-64, puis ladite fraction azotée ainsi déterminée et exprimée en pourcentage de poids de produit sec est multipliée par le facteur 6,25. Cette méthode est bien connue de l'homme du métier.

Dans la présente invention, l'expression « protéine végétale » désigne toute protéine issue de céréales, d'oléagineux, de légumineuses ou de tubercules. Ces protéines peuvent être utilisées seules ou en mélanges, choisies dans la même famille ou dans des familles différentes.

Par « légumineuses » au sens de la présente invention, on entend toutes plantes appartenant aux familles des césalpiniacées, des mimosacées ou des papilionacées et notamment toutes plantes appartenant à la famille des papilionacées comme, par exemple, le pois, le haricot, la fève, la féverole, la lentille, la luzerne, le trèfle ou le lupin.

Selon un mode préférentiel de la présente invention, la protéine végétale appartient aux protéines de légumineuses.

Selon un autre mode préférentiel, la protéine de légumineuse est choisie dans le groupe comprenant le pois, le haricot, la fève et la féverole, et leurs mélanges.

De manière encore plus préférée, ladite protéine de légumineuse est la protéine de pois.

Le terme « pois » est ici considéré dans son acception la plus large et inclut en particulier :

- toutes les variétés sauvages dé « pois lisse » (« smooth pea »), et
- toutes les variétés mutantes de « pois lisse » et de « pois ridé » (« wrinkled pea ») et ce, quelles que soient les utilisations auxquelles on destine généralement lesdites variétés (alimentation humaine, nutrition animale et/ou autres utilisations).

L'expression « protéine soluble» utilisée dans la présente invention désigne toute protéine (autre que la protéine de pomme de terre), native ou non, notamment toute protéine pulvérulente (sous forme de poudre) ou tout extrait protéique qui présente une solubilité dans l'eau, mesurée selon un test A, comprise entre 35% et 99%, plus préférentiellement entre 45% et 90% et plus préférentiellement encore entre 50% et 90%. L'expression « protéine soluble », lorsqu'elle est appliquée dans la présente invention à une protéine de pommes de terre désigne toute protéine de pommes de terre dont la solubilité est supérieure à 25% selon le test A.

Ce test A consiste à déterminer la teneur en matières solubles dans l'eau à pH 7,5 par une méthode de dispersion d'une prise d'essai de l'échantillon de protéines ou d'extrait protéique dans de l'eau distillée et analyse du surnageant obtenu après centrifugation.

Dans un bécher de 400 ml, on introduit une prise d'essai d'exactement 2,0 g d'échantillon et un barreau aimanté (référence N°ECN 442-4510 / société VWR). On tare le tout puis on ajoute 100,0 g d'eau distillée à 20°C $\pm$ 2°C.

On ajuste le pH à 7,5 avec HCl 1N ou NaOH 1N et on complète à 200,0 g exactement avec de l'eau distillée.

On agite pendant 30 minutes puis centrifuge 15 minutes à 3000 g.

Après centrifugation, on prélève exactement 25,0 g de surnageant dans un cristallisoir préalablement taré. On place à l'étuve à 103°C jusqu'à masse constante.

La solubilité aqueuse est calculée grâce à l'équation suivante :

$$\text{Solubilité} = \frac{(m1-m2) \times 200 \times 100}{m3 \times P}$$

avec m1 = masse en g du cristallisoir après séchage

m2 = masse en g du cristallisoir vide

m3 = masse en g de surnageant repris

P = masse en g de la prise d'essai échantillon.

Le terme « fonctionnel» utilisé dans la présente invention désigne toute propriété non nutritionnelle, hormis la solubilité. Ces diverses propriétés des protéines végétales conformes à l'invention contribuent à l'obtention des caractéristiques finales désirées du produit dans lequel elles sont incorporées. Dans la présente demande, le terme « fonctionnel » s'attache plus particulièrement aux capacités émulsionnante, émulsifiante et gélifiante des protéines végétales selon l'invention.

Le procédé de fabrication de l'invention constitue un moyen simple et peu coûteux de fabrication d'une protéine végétale soluble et fonctionnelle.

Les protéines végétales soumises au procédé selon l'invention peuvent être obtenues en mettant en oeuvre différents procédés de préparation. De manière avantageuse, elles sont préparées par le procédé décrit ci-après.

La première étape du procédé de préparation préféré consiste à mettre en suspension une farine végétale ou une râpure, s'il s'agit de tubercules végétaux râpés, dans de l'eau. Dans la présente invention, le terme « farine végétale » s'entend au sens large, qu'il s'agisse de farine végétale à proprement parlé ou de râpure de tubercules végétaux, notamment de râpure de pommes de terre. En effet, ladite farine végétale peut être issue des céréales, des oléagineux, des légumineuses ou des tubercules, utilisée seule ou en mélanges, choisie dans la même famille ou dans des familles différentes.

L'étape de mise en suspension est suivie d'une extraction de l'amidon et des fibres de manière à obtenir une suspension protéique de 3 à 15 % de matière sèche en poids. A cette étape cependant, lorsqu'il s'agit du blé ou de la pomme de terre, les protéines sont extraites en premier lieu tandis que l'amidon et les fibres sont extrais dans un second temps.

Les protéines végétales sont ensuite extraites de la suspension protéique de manière à obtenir un extrait de protéines natives solubles de matière sèche supérieure à 15% en poids.

Dans la présente invention, l'expression « protéine native » désigne toute protéine isolée d'une source végétale et substantiellement non dénaturée de manière à ce qu'elle conserve une bonne solubilité dans l'eau, i.e. une solubilité supérieure à 50% (exception faite des protéines de pommes de terre pour lesquelles une bonne solubilité correspond à une solubilité supérieure 25%). Un aspect avantageux de la présente invention est de fonctionnaliser des protéines végétales tout en leur maintenant une bonne solubilité.

L'étape d'isolement, appelée également communément étape d'extraction, peut consister en tout procédé d'obtention d'un extrait de protéines bien connu de l'homme du métier tel qu'une précipitation isoélectrique ou une imprégnation suivie d'une technique de séparation par tamisage, filtrations, centrifugation ou toute autre technique équivalente.

Selon un mode de réalisation préféré, l'étape d'isolement est réalisée par floculation, i.e. par précipitation isoélectrique, puis récupération des protéines floculées grâce à un séparateur à assiettes et/ou une décanteuse centrifuge (séparatrice DA 250, GEA Westfalia et décanteur CA 505, GEA Westfalia).

L'extrait de protéines végétales natives ainsi obtenu est alors soumis à une étape de fonctionnalisation constituée de deux étapes distinctes : (i) une étape de chauffage, avantageusement effectuée par échange thermique avec de la vapeur d'eau, et (ii) une étape de refroidissement, préférentiellement réalisée par abaissement de la pression endessous de 300 mbar absolu.

Dans un procédé particulier selon l'invention, l'étape de chauffage a lieu dans une chambre d'infusion. Cependant, il est possible d'avoir recours à n'importe quel système de chauffage convenable. En particulier, l'étape de chauffage peut être réalisée par injection, plutôt que par infusion. Le procédé de chauffage par injection est également un procédé d'échange direct, c'est-à-dire un procédé avec contact entre le produit et le caloporteur, la montée en température est donc instantanée. Dans le mode de réalisation préféré de la présente invention le caloporteur correspond à de la vapeur d'eau.

L'extrait de protéines végétales est directement envoyé dans la chambre d'infusion. En effet, la Société Demanderesse est allée à l'encontre d'un préjugé technique en appliquant le procédé à un extrait protéique présentant une viscosité à 20°C ± 2°C, mesurée selon le test E, comprise entre 10 000 mPa.s et 100 000 mPa.s. La forte viscosité de l'extrait et son aptitude à former une "croûte" à la surface de la chambre laissent à penser à l'homme du métier qu'une installation de traitement thermique est inapte pour la mise en oeuvre du procédé selon l'invention. De plus, l'extrait de protéines végétales natives soumis à l'étape de fonctionnalisation présente préférentiellement une teneur en protéines supérieure à 60% sur sec et une matière sèche supérieure à 15%.

Selon le procédé de l'invention, une pompe positive type Moineau (commercialisée sous la marque PCM) transfère l'extrait protéique dans la chambre d'infusion en assurant une pression et un débit d'alimentation de la chambre constants et stables. L'extrait protéique arrive dans la chambre à une température de 20°C à 70°C.

L'étape de chauffage est réalisée en dispersant, de façon circulaire, l'extrait protéique dans de la vapeur d'eau sous pression. Cette étape de chauffage correspond donc à un procédé d'échange direct. L'extrait protéique coule verticalement et se mélange à la vapeur sans risque de contact avec la paroi chaude de la chambre d'infusion. Chaque flot d'extrait protéique est le siège d'un écoulement qui garantit, avec la surface d'échange mise en jeu, un transfert thermique efficace. L'extrait protéique est instantanément chauffé à une température comprise entre 100°C et 160°C en moins de 0,1 seconde. Le processus de chauffage dans la chambre d'infusion doit être très précis.

Lors de cette étape de chauffage, il peut être nécessaire d'assurer un temps de chambrage précis, par exemple, de 0,1 à 0,8 seconde, après atteinte de la température désirée.

Dans la présente invention, le terme « chambrage » désigne toute opération dans laquelle l'extrait protéique séjourne à une température comprise entre 100°C à 160°C pendant un temps précis.

Après chauffage dans la chambre d'infusion, l'extrait protéique chauffé tombe directement dans une pompe positive (pompe à lobes).

A la sortie de la pompe, l'extrait protéique chauffé est refroidi par détente en transférant rapidement la dispersion chaude dans une chambre de détente sous une pression inférieure à celle utilisée pendant le chauffage ou dans un vase d'expansion pour provoquer un dégagement de vapeur dans une chambre à vide. De manière préférée, l'extrait protéique est refroidi par abaissement de la pression dans un vase d'expansion.

Dans cette étape, il est souhaitable d'obtenir une vaporisation maximale et il est possible de choisir des pressions ou dépressions (vide) permettant d'atteindre ce but. Il est ainsi possible de moduler la quantité de l'extrait sec en évaporant une quantité variable d'eau. De manière simultanée, grâce au dégagement de vapeur, on obtient une désodorisation importante.

A cette étape en particulier, la Société Demanderesse s'est heurtée à de nombreux problèmes d'extraction notamment au niveau de la pompe d'extraction de l'extrait protéique placée à la sortie du vase d'expansion sous vide.

En effet, sachant la nature thixotropique des protéines végétales, notamment de la protéine de pois, il va à l'encontre d'un préjugé technique de mettre en oeuvre un procédé selon l'invention appliqué à de tels extraits protéiques. Malgré ce préjugé, la Société Demanderesse a mis en oeuvre, après de nombreuses recherches, une pompe positive type Moineau (commercialisée sous la marque PCM) installée directement à la sortie du vase d'expansion. Ladite pompe, associée préféréntiellement à un mobile d'agitation permettant le cisaillement de l'extrait protéique en sortie du vase d'expansion, a permis une production stable de protéines végétales solubles et fonctionnelles. Le pH de l'extrait protéique peut être rectifié préalablement ou postérieurement à l'étape de fonctionnalisation. Ledit pH de l'extrait protéique est ainsi amené préférentiellement entre 6,2 et 9 unités pH.

Avantageusement, l'extrait de protéines solubles et fonctionnelles peut être soumis à un échangeur à surface raclée après l'étape de fonctionnalisation. D'excellents résultats ont été obtenus en utilisant l'échangeur à surface raclée Contherm (TetraPack) à des températures d'entrée et de sortie respectivement de 70°C ± 2°C et 95°C ± 2°C et à 100 rpm durant 1 minute.

Les protéines solubles et fonctionnelles issues du procédé de fabrication selon l'invention présentent, à l'issue de l'étape de fonctionnalisation, i.e. juste après le traitement thermique,

- une solubilité dans l'eau supérieure à 50% (exception faite des protéines de pomme de terre qui présentent une solubilité dans l'eau supérieure à 25%) ;
- une capacité émulsionnante, mesurée selon un test C, comprise entre 700 000 mPa.s et 1 200 000 mPa.s, préférentiellement entre 750 000 mPa.s et 1 200 000 mPa.s pour un échantillon directement placé à 4°C durant 24h et comprise entre 500 000 mPa.s et 1 100 000 mPa.s pour un échantillon traité à 75°C puis placé à 4°C durant 24h ;
- une capacité émulsifiante, mesurée selon un test B, comprise entre 70% et 95% (exception faite des protéines de pomme de terre qui présentent une capacité émulsifiante comprise entre 65% et 95%, préférentiellement entre 70% et 95%);
- une viscosité à 20°C $\pm$ 2°C, mesurée selon un test E, supérieure ou égale à 23 000 mPa.s.

Finalement, les protéines solubles et fonctionnelles issues du procédé de fabrication selon l'invention sont soumises à une étape de séchage de manière à obtenir des protéines pulvérulentes. L'étape de séchage est réalisée selon une technique telle que l'atomisation, la granulation, l'extrusion ou par tout autre moyen de séchage connu de l'homme du métier, et dans des conditions adaptées à l'équipement choisi. De manière préférée, les protéines végétales solubles et fonctionnelles issues du procédé de fabrication selon l'invention sont remises en solution dans de l'eau et soumises à une étape d'atomisation.

Le pH des protéines pourra être rectifié avant atomisation selon le pH cible souhaité pour l'application finale.

Entre l'étape de fonctionnalisation et l'étape de séchage, le procédé de fabrication selon l'invention peut comprendre en outre un traitement de cisaillement des protéines végétales fonctionnelles tel qu'une homogénéisation haute pression ou une pompe à haut cisaillement. D'excellents résultats ont été obtenus en utilisant un homogénéisateur haute pression APV-SPX à 2 étages (150 bar et 40 bar).

La mise en oeuvre du procédé selon l'invention permet d'obtenir une protéine végétale présentant une bonne solubilité, i.e. une solubilité à 20° $\pm$ 2°C, mesurée selon le test A, supérieure 50% (exception faite des protéines de pommes de terre pour lesquelles une bonne solubilité correspond à une solubilité supérieure 25%), à l'issue de procédé de fabrication (poudre de protéines végétales selon l'invention), ainsi que d'excellentes capacités émulsionnante, selon le test C, et émulsifiante, selon le test B. Plus précisément, les protéines végétales pulvérulentes selon l'invention, autres que les protéines de pommes de terre, présentent, à l'issue du procédé de séchage,

- une solubilité dans l'eau supérieure à 50% (exception faite des protéines de pomme de terre qui présentent une solubilité dans l'eau supérieure à 25%) ;
- une capacité émulsionnante comprise entre 700 000 mPa.s et 1 200 000 mPa.s, préférentiellement entre 750 000 mPa.s et 1 200 000 mPa.s pour un échantillon directement placé à 4°C durant 24h (exception faite des protéines de pomme de terre qui présentent une capacité émulsionnante comprise entre 400 000 mPa.s et 600 000 mPa.s pour un échantillon directement placé à 4°C durant 24h) et comprise entre 500 000 mPa.s et 1 100 000 mPa.s pour un échantillon traité à 75°C puis placé à 4°C durant 24h ;
- une capacité émulsifiante comprise entre 70% et 95% (exception faite des protéines de pomme de terre qui présentent une capacité émulsifiante comprise entre 65% et 95%, préférentiellement entre 70% et 95%) ;
- une viscosité à 20°C supérieure ou égale à 21 000 mPa.s pour un produit à 16% de matière sèche.

Les protéines de pomme de terre pulvérulentes selon l'invention présentent, à l'issue du procédé de séchage, une solubilité dans l'eau supérieure à 25% ;

- une capacité émulsionnante comprise entre 400 000 mPa.s et 600 000 mPa.s pour un échantillon directement placé à 4°C durant 24h et comprise entre 500 000 mPa.s et 1 100 000 mPa.s pour un échantillon traité à 75°C puis placé à 4°C durant 24h ;
- une capacité émulsifiante comprise entre 65% et 95%, préférentiellement entre 70% et 95%.

Les protéines végétales pulvérulentes selon l'invention présentent également, à l'issue du procédé de séchage, une matière sèche supérieure à 92%.

Dans la présente invention, la Capacité Emulsifiante (ci-après « CE ») correspond au pourcentage de « crème » d'émulsion, formée et stable après centrifugation, en fonction d'une certaine concentration en protéines et en huile, à l'aide d'un homogénéisateur POLYTRON (de type PT 45-80 (muni d'une broche Easy-clean référence B99582 / société Bioblock).

De manière plus précise, ce test, noté test B, consiste :

- Dans un pot de 2 l de forme haute (23.5 cm de haut, 11.5 cm de diamètre), préparer une solution de protéines équivalente à 2,0 % de protéines $N_{6,25}$ dans 250 ml d'eau déminéralisée,
- Introduire un barreau aimanté (référence N°ECN 442-4510 / société VWR),

- Mélanger la solution de protéines pendant 10 minutes sur un agitateur magnétique, de marque IKA® RCT Classic, à la vitesse de 1100 t/min,
- Préparer 250 ml d'huile de colza alimentaire,
- Retirer le barreau aimanté,
- Plonger la broche du POLYTRON (PT 45-80) dans la solution de protéines à mi-hauteur de la solution de protéines,
- Positionner la vitesse de rotation à 5,5 (entre 5 et 6) soit entre 15200 et 15450 rpm,
- Lancer l'agitation et verser les 250 ml d'huile de colza en 1 minute,
- Transvider l'émulsion dans un bécher,
- Peser 2 fois exactement 35,0 g de l'émulsion dans 2 tubes gradués à centrifuger de 50 ml,
- Centrifuger à 1500 g pendant 5 minutes, à 20°C,
- Mesurer le volume de la mousse après centrifugation,
- Mesurer le volume total après centrifugation (culot + eau + mousse),
- Vérifier la répétabilité entre les 2 tubes et entre 2 essais identiques.

La Capacité Emulsifiante sera déterminée par calcul, grâce à l'équation suivante :

$$CE = \frac{\text{Volume de mousse après centrifugation}}{\text{Volume total après centrifugation}} \times 100$$

Les protéines végétales fonctionnelles selon l'invention présentent de préférence une capacité émulsifiante, mesurée selon le test B, comprise entre 65% et 95%, préférentiellement entre 70% et 95%.

Dans la présente invention, la capacité émulsionnante est mesurée selon le test C ci-après décrit :

- Préparer une suspension protéique en incorporant 50g d'échantillon (poudre de protéines végétales fonctionnelles atomisées) dans 250 g d'eau distillée à 20°C ± 2°C sous agitation forte pendant 2 min à une vitesse de 250 rpm ;
- Incorporer à la suspension 250 g d'huile de tournesol en filet en 30 secondes toujours sous agitation .forte à une vitesse de 250 rpm ;
- Laisser sous agitation durant 2,5 minutes ;
- Ajouter 11g de sel fin de cuisine au mélange protéines/eau/huile ;
- Poursuivre l'agitation pendant 30 secondes à 250 rpm ;
- Remplir 3 boîtes de conserve avec le mélange protéines/eau/huile/sel ;
- Sertir les boîtes ;
- Placer la première boite à 4°C ± 2°C au réfrigérateur durant 24h ;
- Pasteuriser la seconde boite 1h30 au bain-marie à 75°C ± 2°C puis placer la dans un bassin d'eau froide pendant 1h et stocker ladite boite à 4°C ± 2°C au réfrigérateur durant 24h ;
- Stériliser la troisième boite pendant 1h en autoclave à 120°C puis placer la boite dans un bassin d'eau froide pendant 1h et stocker ladite boite à 4°C ± 2°C au réfrigérateur durant 24h ;
- Après 24h de stockage, mesurer la viscosité de chaque boite (Brookfield hélipath - vitesse de rotation : 5 rpm).

Les protéines végétales fonctionnelles selon l'invention présente de préférence une capacité émulsionnante, mesurée selon le test C, comprise entre 700 000 mPa.s et 1 200 000 mPa.s, préférentiellement entre 750 000 mPa.s et 1 200 000 mPa.s pour un échantillon directement placé à 4°C durant 24h (exception faite des protéines de pomme de terre qui présentent une capacité émulsionnante comprise entre 400 000 mPa.s et 600 000 mPa.s pour un échantillon directement placé à 4°C durant 24h) et comprise entre 500 000 mPa.s et 1 100 000 mPa.s pour un échantillon traité à 75°C puis placé à 4°C durant 24h.

Les protéines végétales fonctionnelles selon l'invention présentent avantageusement, lorsqu'elles se trouvent à l'état de poudre de protéines (protéines pulvérulentes), une matière sèche comprise entre 90% et 95%, préférentiellement supérieure à 92%, et une teneur en protéines totales supérieure à 60% sur sec. Pour déterminer le taux de protéines totales, on effectue le dosage de la fraction azotée soluble contenue dans l'échantillon selon la méthode de Dumas, puis on obtient le taux de protéines totales en multipliant le taux d'azote exprimé en pourcentage de poids de produit sec par le facteur 6,25. Cette méthode est bien connue de l'homme du métier.

Les protéines végétales fonctionnelles selon l'invention présentent avantageusement une capacité gélifiante, mesurée selon un test D, comprise entre 10 000 mPa.s et 250 000 mPa.s, préférentiellement entre 10 000 mPa.s et 50 000 mPa.s pour un échantillon directement placé à 4°C durant 24h et comprise entre 100 000 mPa.s et 500 000 mPa.s pour un échantillon traité à 75°C puis placé à 4°C durant 24h.

Dans la présente invention, la capacité gélifiante est mesurée selon le test D ci-après décrit :

- Préparer une suspension protéique en incorporant 50g d'échantillon (poudre de protéines végétales fonctionnelles atomisées) dans 250,0 g d'eau distillée à 20 ± 22°C sous agitation forte pendant 2 min à une vitesse de 250 rpm ;
- Remplir 3 boîtes de conserve avec le mélange protéines/eau ;
- Sertir les boîtes ;
- Placer la première boite à 4°C ± 2°C au réfrigérateur durant 24h ;
- Pasteuriser la seconde boite 1h30 au bain-marie à 75°C ± 2°C puis placer la boite dans un bassin d'eau froide pendant 1h et stocker ladite boite à 4°C ± 2°C au réfrigérateur durant 24h ;
- Stériliser la troisième boite pendant 1h en autoclave à 120°C puis placer la boite dans un bassin d'eau froide pendant 1h et stocker ladite boite à 4°C ± 2°C au réfrigérateur durant 24h ;
- Après 24h de stockage, mesurer la viscosité de chaque boite (Brookfield hélipath - vitesse de rotation : 5 rpm).

Sous forme pulvérulente, les protéines végétales fonctionnelles selon l'invention présentent avantageusement une viscosité à 20°C ± 2°C, mesurée selon le test E, supérieure ou égale à 20 000 mPa.s, préférentiellement supérieure ou égale à 21 000 mPa.s et encore plus préférentiellement comprise entre 21 000 mPa.s et 100 000 mPa.s.
Dans la présente invention, la viscosité est mesurée selon le test E ci-après décrit :

- Préparer une suspension protéique en incorporant 50,0 g d'échantillon (poudre de protéines végétales fonctionnelles atomisées) dans 250,0 g d'eau distillée à 20 ± 2°C sous agitation forte pendant 2 min à une vitesse de 250 rpm ;
- Remplir une boîte de conserve avec le mélange protéines/eau ;
- Mesurer la viscosité du contenu de la boîte (Brookfield hélipath - vitesse de rotation : 5 rpm) à 20°C ± 2°C. Lorsque les protéines sont déjà sous forme liquide ou sous forme d'un extrait, introduire 250 ml dudit liquide ou extrait dans une boîte de conserve et mesurer la viscosité du contenu de la boîte (Brookfield hélipath - vitesse de rotation : 5 rpm) à 20°C ± 2°C.

Les protéines végétales fonctionnelles de la présente invention possèdent également une absence de décantation, c'est-à-dire une excellente tenue en suspension, ce qui facilite grandement leur mise en oeuvre dans les procédés industriels et représente donc un avantage majeur.
La tenue en suspension est mesurée dans une éprouvette graduée de 250 ml. Après reconstitution d'une solution de 250 ml à 15% de poudre granulée selon l'invention (les protéines végétales atomisées sont hydratées 10 minutes dans de l'eau déminéralisée afin de s'affranchir des forces ioniques), le volume décanté est mesuré toutes les heures pendant 7 heures, puis au bout de 24h et de 48h. Il n'y a aucune décantation de la poudre granulée, et ce même après 48h d'attente.
Avantageusement, les protéines végétales fonctionnelles selon l'invention présentent une teneur en hexanal inférieure à 50 ng/g et

- une teneur en 2-methoxy-3-(1-methylpropyl)pyrazine (notée P1) inférieure à 15 pg/g, préférentiellement inférieure à 10 pg/g, et
- une teneur en 2-methoxy-3-isopropyl-5 ou 6-méthylpyrazine (notée P2) inférieure à 15 pg/g, préférentiellement inférieure à 10 pg/g, et
- une teneur en 2-methyl-3-isopropylpyrazine (notée P3) inférieure à 15 pg/g, préférentiellement inférieure à 10 pg/g.

Les protéines végétales fonctionnelles selon l'invention ou susceptible d'être obtenues par le procédé selon l'invention permettent de réaliser des compositions particulières adaptées à des domaines aussi diversifiés que l'alimentaire, la pharmacie, la cosmétique, l'agrochimie, les matériaux de construction, les papiers-cartons. Ainsi, la présente invention concerne en particulier des compositions comprenant au moins une protéine végétale selon l'invention ou obtenue par le procédé selon l'invention, en particulier une composition alimentaire, pharmaceutique, cosmétique ou agrochimique. En particulier, la présente invention concerne en outre l'utilisation d'une protéine végétale selon l'invention ou obtenue par le procédé selon l'invention dans la fabrication d'aliments.
L'invention sera encore mieux comprise à la lecture des exemples qui suivent, lesquels se veulent illustratifs en faisant seulement état de certains modes de réalisation et de certaines propriétés avantageuses selon l'invention, et non limitatifs.

**EXEMPLE 1 :** Préparation de protéines de pois solubles et fonctionnelles selon l'invention

De la farine de pois est préparée par broyage de pois fourragers décortiqués sur broyeur à marteaux de type ALPINE équipé d'une grille de 100 µm.

300 kg de farine à 87 % de matière sèche sont ensuite mis à tremper dans de l'eau à la concentration finale de 25 % sur sec, à un pH de 6,5.

1044 kg de suspension de farine à 25 % de matière sèche (soit donc 261 kg de farine sèche) sont alors introduits avec 500 kg d'eau dans une batterie d'hydrocyclones composée de 14 étages. Elle est alimentée par la suspension de farine à l'étage n°5.

Cette séparation conduit à l'obtention d'une phase légère qui correspond à la sortie de l'étage n°1. Elle est constituée du mélange protéines, fibres internes et solubles.

Cette phase légère en sortie d'hydrocyclones renferme en mélange (142 kg sur sec au total) : les fibres (environ 14,8 % en poids, soit 21 kg sec), les protéines (environ 42,8 % en poids, soit 60,8 kg sec) et les solubles (environ 42,4 % en poids, soit 60,2 kg sec). Cette fraction présente une matière sèche de 10 %.

On procède à la séparation des fibres sur décanteurs centrifuges de type WESTFALIA employés dans une unité industrielle féculière de traitement de la pomme de terre.

La phase légère en sortie de décanteur centrifuge renferme un mélange de protéines et de solubles, tandis que la phase lourde renferme les fibres de pois. La phase lourde renferme 105 kg de fibres à 20 % de matière sèche. On constate que la quasi-totalité des fibres est bien retrouvée dans cette fraction.

Quant à la fraction protéines et solubles, elle renferme 1142 kg d'un mélange en solution de solubles et de protéines (fraction à 6 % de matière sèche).

On procède à la floculation des protéines à leur point isoélectrique par ajustement de la phase légère en sortie de décanteur centrifuge à un pH de 4,5 et chauffage à 50 °C.

Les protéines ainsi mises à floculer sont laissées 10 minutes en cuve de maturation. On procède ensuite à la séparation solubles protéines sur décanteur centrifuge.

Le mélange obtenu en sortie de la cuve de maturation alimente alors la décanteuse centrifuge à un débit de 5 m$^3$/h. On obtient une phase lourde, ou « extrait de protéines natives solubles », d'une matière sèche de 25 %, d'une teneur en protéines de 85% ($N_{6,25}$) et d'une viscosité à 20°C $\pm$ 2°C de 30 000 mPa.s. Le pH de 4,5 de l'extrait protéique est rectifié à une valeur de 6,6 par ajout de soude.

On procède sur l'extrait protéique ainsi obtenu à un traitement thermique de 122°C pendant 0,2s dans une chambre d'infusion ou infuseur Simplex type SDH puis on refroidit à 45,5°C par détente dans un vase d'expansion sous vide ou flash cooling. On procède enfin à une atomisation sur tour MSD (Multi Stage Dryer) dans les conditions suivantes.

On choisit une tour d'atomisation MSD et on l'alimente avec les protéines de pois issues de l'infuseur Simplex. L'air de séchage entre à 180°C et ressort à 80°C, le lit statique en bas de la tour étant réchauffé par de l'air à 80°C.

En sortie de la tour d'atomisation, le produit passe sur un lit fluide vibré où il est refroidi à température ambiante. On peut procéder avantageusement au recyclage des fines.

L'ensemble de ces opérations permet l'obtention d'une poudre de protéines de pois conforme à l'invention, présentant un diamètre moyen de 200 pm et une densité moyenne de 0,4.

**EXEMPLE 2** Préparation de protéines de pommes de terre solubles et fonctionnelles selon l'invention

On nettoie 100 kg de pommes de terre que l'on râpe sur des râpes de marque Nivoba.

On met en suspension les pommes de terre râpées dans 10 kg d'eau potable.

On extrait 85 kg d'eaux rouges du mélange pommes de terre râpées et eau sur des décanteurs centrifuges de type WESTFALIA, lesdites eaux rouges présentent une matière sèche de 4,5% et une teneur en protéines de 55% environ.

On procède à la floculation des protéines contenues dans les eaux rouges à leur point isoélectrique par ajustement des eaux rouges à un pH de 5 par ajout d'acide chlorhydrique (37%).

On extrait les protéines dans un décanteur centrifuge de type WESTFALIA.

On obtient 1,14 kg de protéines pures que l'on remet en suspension dans de l'eau de manière à obtenir un extrait protéique à 35% de matière sèche et d'une teneur en protéines de 85% ($N_{6,25}$)

Le pH de l'extrait protéique est rectifié à une valeur de 7,0 par ajout de soude.

On procède sur l'extrait protéique ainsi obtenu à un traitement thermique de 125°C pendant 0,8s dans une chambre d'infusion ou infuseur Simplex type SDH puis on refroidit à 65°C par détente dans un vase d'expansion sous vide ou flash cooling.

On procède enfin à une atomisation sur une tour de type Niro équipée d'une turbine sans recyclage des fines particules.

L'ensemble de ces opérations permet l'obtention d'une poudre de protéines de pommes de terre conforme à l'invention, présentant un diamètre moyen de 80 $\mu$m et une densité moyenne de 0,4.

**EXEMPLE 3:** Exemple comparatif avant/après traitement thermique (protéines de pois)

Des protéines de pois, SF, conformes à l'invention et préparées en appliquant le procédé décrit dans l'exemple 1 sont comparées, dans le tableau I, à des protéines de pois n'ayant pas été soumises au procédé de fonctionnalisation selon l'invention (témoin S).

Tableau I

|  | S | SF |
|---|---|---|
| **Température de floculation** | 50 | 50 |
| **pH rectifié** | 6, 6 | 6, 6 |
| **Température de l'infuseur** | - | 122 |
| **Température du flash cooling** | - | 45,5 |
| **Solubilité (%/sec)** | 55,0 | 54,9 |
| **Gel tq** | 141 | 8 300 |
| **Gel 4°C** | 4 000 | 44 000 |
| **Gel 75°C** | 32 000 | 370 000 |
| **Gel 120°C** | 200 000 | 720 000 |
| **Emulsion tq** | 40 000 | 1 000 000 |
| **Emulsion 4°C** | 74 000 | 1 000 000 |
| **Emulsion 75°C** | 100 000 | 1 000 000 |
| **Emulsion 120°C** | 150 000 | 280 000 |
| **CE (%)** | 64,0 | 70,7 |

Les protéines de pois SF conformes à l'invention présentent une meilleure solubilité dans l'eau selon le test A (pourcentage de solubilité par rapport au poids sec) et une capacité gélifiante (« Gel ») mesurée selon le test D plus élevée, tant à température ambiante (tq soit à 20°C ± 2°C) qu'à 4°C, 75°C et 120°C, que les protéines de pois accessibles dans le commerce, non fonctionnalisés selon le procédé de l'invention.

De plus, les protéines de pois SF conformes à l'invention présentent une capacité émulsionnante (« Emulsion ») mesurée selon le test C beaucoup plus haute, tant à température ambiante (tq à 20°C ± 2°C) qu'à 4°C, 75°C et 120°C, et une capacité émulsifiante (« CE ») selon le test B bien supérieure aux protéines de pois accessibles dans le commerce et non fonctionnalisées selon le procédé de l'invention.

**EXEMPLE 4:** Exemple comparatif avant/après traitement thermique (protéines de pommes de terre)

Des protéines de pommes de terre, SF, conformes à l'invention et préparées en appliquant le procédé décrit dans l'exemple 2 sont comparées, dans le tableau II, à des protéines de pommes de terre n'ayant pas été soumises au procédé de fonctionnalisation selon l'invention (témoin S).

Tableau II

|  | S | SF |
|---|---|---|
| **Température de floculation** | 50 | 50 |
| **pH rectifié** | 7,0 | 7,0 |
| **Température de l'infuseur** | - | 125 |
| **Température du flash cooling** | - | 65,0 |
| **Solubilité (%/sec)** | 26,5 | 35,3 |
| **Gel tq** | 475 | 9 300 |
| **Gel 4°C** | 6 300 | 40 000 |
| **Gel 75°C** | 178 000 | 204 000 |
| **Gel 120°C** | 260 000 | 550 000 |

(suite)

|  | S | SF |
|---|---|---|
| Emulsion tq | 163 000 | 197 000 |
| Emulsion 4°C | 300 000 | 418 000 |
| Emulsion 75°C | 225 000 | 540 000 |
| Emulsion 120°C | 140 000 | 500 000 |
| CE (%) | 60,0 | 66,7 |

Les protéines de pommes de terre SF conformes à l'invention présentent une meilleure solubilité dans l'eau selon le test A (pourcentage de solubilité par rapport au poids sec) et une capacité gélifiante mesurée selon le test D plus élevée, tant à température ambiante (tq soit à 20°C ± 2°C) qu'à 4°C, 75°C et 120°C, que les protéines de pommes de terre non fonctionnalisées selon le procédé de l'invention.

De plus, les protéines de pommes de terre SF conformes à l'invention présentent une capacité émulsionnante mesurée selon le test C plus élevée, tant à température ambiante (tq à 20°C ± 2°C) qu'à 4°C, 75°C et 120°C, et une capacité émulsifiante selon le test B bien supérieure aux protéines de pommes de terre non fonctionnalisés selon le procédé de l'invention.

EXEMPLE 5: Exemple comparatif concernant la teneur en pyrazines et en hexanal des protéines de pois

La teneur en hexanal ainsi que celle en pyrazines a été mesurée pour différents échantillons. On entend ici par « pyrazines » l'association des pyrazines suivantes : la 2-methoxy-3-(1-methylpropyl)pyrazine (notée P1), la 2-methoxy-3-isopropyl-5 ou 6-méthylpyrazine (notée P2) et la 2-methyl-3-isopropylpyrazine (notée P3).

## 1. Echantillons comparés

Des protéines de pois, SF1 et SF2, conformes à l'invention et préparées en appliquant le procédé décrit dans l'exemple 1 ont été comparées, dans le tableau III, à des protéines de pois n'ayant pas été soumises au procédé de fonctionnalisation selon l'invention (témoins S1 et S2).

Les protéines de pois conformes à l'invention, SF1 et SF2, ont été également comparées à des protéines de pois ayant subi des procédés de décontamination bien connus de l'homme du métier tels que le blanchiment (échantillon B1) ou le blanchiment associé à un trempage bicarbonate (échantillon B2). Les protéines de pois B1 ont été obtenues par blanchiment de la matière première à 100°C pendant 15 minutes. Les pois sont ensuite broyés puis les protéines de pois. B1 ont été extraites par isofloculation (pH = 4,5, température de floculation = 50°C) comparable à celle effectuée sur les protéines de pois conformes à l'invention. Les protéines de pois B1 ont été obtenues par blanchiment, comme décrit ci-dessus, précédé d'une étape de trempage du pois dans une solution à 2% de bicarbonate de sodium pendant 18h.

Les protéines de pois conformes à l'invention, SF1 et SF2, ont été également comparées aux protéines de pois, issues de sociétés concurrentes, Pisane F9 (Cosucra), Pisane M9 (Cosucra), Propulse (Parrheim), PPI (Pea Proten Isolate, ref 700007651 Emsland staerke) et PP (Pea Protein, Emsland staerke).

## 2. Méthode de classement des odeurs

Les composés volatils désorbés d'extraits protéiques de pois ont été classés selon l'intensité de leur odeur végétale ou "note verte", descripteur olfactif bien connu de l'homme du métier. Certains échantillons ont présenté également une « note animale » (classement de l'odeur : "poubelles, aliments pour animaux, pieds") ; dans ce cas, cela a été spécifié.

Pour cette méthode de classement de l'intensité de la « note verte », 11 échantillons ont été analysés par un test sensoriel de flairage des échantillons à sec et à température ambiante (20°C ± 2°C). Le flairage a été réalisé en aveugle afin d'éliminer toute influence des qualités extrinsèques des produits par un groupe de 20 sujets entraînés et isolés dans des cabines individuelles en salle de dégustation. Le flairage a été réalisé dans le respect des règles d'hygiène.

## 3. Méthode TDCPGSM

Les composés volatils désorbés d'extraits protéiques de pois ont été quantifiés. Pour cela, 11 échantillons ont été analysés par la technique de thermo-désorption couplée à la chromatographie en phase gazeuse et à la spectrométrie de masse (TDCPGSM).

Les composés ciblés sont :

- l'hexanal ;
- la 2-methoxy-3-(1-methylpropyl)pyrazine (ci-après notée P1) ;
- la 2-methoxy-3-isopropyl-5 ou 6-méthylpyrazine (ci-après notée P2) ;
- la 2-methyl-3-isopropylpyrazine (ci-après notée P3).

Les conditions de l'analyse par TDCPGSM sont les suivantes : 1g d'échantillon est placé dans une cartouche d'extraction en verre (M3, Maillières Frères (Ets), Aubière, France) et est balayé par un gaz inerte (N2) permettant la préconcentration des molécules volatiles sur un piège (tubes inox pré-conditionnés et bouchés ¼" 2 ABS.S- Tenax- Carbographe 1, SRA, France). Le piégeage est effectué avec un appareil Thermo désorbeur Markes-Unity GC : 6890 Agilent / MS : 5973i Agilent, durant 30 minutes à un débit de 70 ml/min.

Les droites de calibration ont été réalisées par injection, dans un tube de prélèvement, des molécules diluées dans le méthanol.

Pour toutes les analyses, 3 standards internes, choisis pour leur stabilité et leur répartition sur le chromatogramme, ont été placés sur le piège adsorbant avant le prélèvement ou avant l'injection des composés à quantifier.

L'injection des molécules volatiles dans le chromatographe en phase gazeuse couplé au spectromètre de masse est réalisée par désorption thermique du piège adsorbant. La séparation des composés volatils a été conduite avec une colonne capillaire apolaire.

Les acquisitions des composés par le spectromètre de masse ont été réalisées en mode SIM avec 3 ions caractéristiques pour chaque composé.

Mise en place des gammes d'étalonnage

Le tableau III regroupe pour chacune des molécules les échelles des concentrations et des masses équivalentes (en ng ou en pg) pour 10 μl de solution déposés sur le piège.

Tableau III

| Concentrations | étalon 1 | étalon 2 | étalon 3 | étalon 4 | étalon 5 | étalon 6 |
|---|---|---|---|---|---|---|
| Hexanal (ppm) | 1 | 10 | 20 | 40 | 60 | 80 |
| Hexanal (ng) | 10 | 100 | 200 | 400 | 600 | 800 |
| P1 (ppb) | 0.5 | 1 | 3 | 5 | 7 | 10 |
| P1 (pg) | 5 | 10 | 30 | 50 | 70 | 100 |

Pour chaque composé, la droite représente la quantité (en ng ou en pg) de composé introduite sur le piège en fonction de la surface du pic rapportée à la surface des pics de standards.

Les gammes d'étalonnage pour la 2-méthoxy-3-isopropyl-5 ou 6-méthylpyrazine (P2) et la 2-méthyl-3-isopropylpyrazine (P3) n'ont pu être réalisées car ces molécules n'existent pas à l'état de molécule pure. Aussi, les concentrations de ces pyrazines sont estimées en fonction de la 2-méthoxy-3-1-méthylpropyl)pyrazine (P1).

Pour l'hexanal, deux droites de calibration ont dû être utilisées, ceci en fonction de la concentration de cette molécule. Une gamme a été réalisé pour les concentrations inférieures à 20 ppm et une gamme pour les concentrations supérieures à 20 ppm.

Equation des droites d'étalonnage :

- Hexanal < 20 ppm : $Y = 0,1857x - 5,392$ ($R^2 = 0,9981$) avec Y, la masse d'hexanal en ng et x, l'aire rapportée aux standards ;
- Hexanal > 20 ppm : $Y = 0,3292x - 164,5$ ($R^2 = 0,9995$) avec Y, la masse d'hexanal en ng et x, l'aire rapportée aux standards ;
- P1 : $Y = 76,752x - 5,218$ ($R^2 = 0,9978$) avec Y, la masse de P1 en pg et x, l'aire rapportée aux standards.

Résultats

Les droites de calibration permettent de calculer la masse (en ng ou pg) de composés piégée sur le tube adsorbant et désorbée de 1g d'extrait protéique de pois.

Les concentrations de P2 et de P3 ont été estimées à partir de la droite d'étalonnage de P1.

## 4. Résultats

Tableau IV

| Molécule | Classement odeur « note verte » | Hexanal (ng/g) | P1 (pg/g) | P2 (pg/g) | P3 (pg/g) |
|---|---|---|---|---|---|
| SF1 | Neutre | 6,5 | 7,9 | 0 | 7,2 |
| SF2 | Note verte la moins prononcée | 3,4 | 4,9 | 1,8 | 5,6 |
| Pisane M9 | + très légère note "animale" | 23,9 | 8,7 | 154,5 | 7,2 |
| PP | | 99,7 | 0,0 | 0,0 | 1,8 |
| B2 | + très légère note "animale" | 3,6 | 2,6 | 44,7 | 24,0 |
| Pisane F9 | | 16,0 | 0,0 | 64,7 | 0,0 |
| B1 | | 8,0 | 11,0 | 123,1 | 6,4 |
| S2 | | 3,2 | 3,3 | 24,8 | 0,0 |
| S1 | Note verte la plus prononcée | 34,9 | 3,3 | 98,5 | 10,2 |
| PPI* | Note "animale" prédominante | 265,0 | 7,2 | 47,1 | 54,0 |

*Pour cet échantillon, le classement odeur « note verte » n'a pas été possible car la « note animale » a été prédominante.

Les protéines de pois SF1 et SF2 conformes à l'invention présentent une odeur beaucoup plus neutre et une teneur en hexanal et en chacune des pyrazines P1, P2 et P3 significativement moins élevée par rapport aux protéines de pois S1 et S2 n'ayant pas subi l'étape de fonctionnalisation selon l'invention ainsi que par rapport aux protéines de pois B1 et B2 extraites de façon « classique ». Les protéines issues de pois blanchis, avec ou sans trempe, respectivement B2 et B1, présentent de faibles teneurs en hexanal mais de fortes teneurs en pyrazines.

De plus, les protéines de pois SF1 et SF2 conformes à l'invention présentent une odeur plus neutre et une teneur en hexanal et en pyrazines nettement moins élevée par rapport aux protéines de pois accessibles dans le commerce (Pisane F9, Propulse, Pisane M9, PPI, PP) et non fonctionnalisées selon le procédé de l'invention.

**EXEMPLE 6:** Propriétés fonctionnelles de protéines de pois selon l'invention et de protéines de pois selon l'art antérieur

Des protéines de pois (lots A à G) conformes à l'invention et préparées en appliquant le procédé décrit dans l'exemple 1 ont été analysées en termes de propriétés fonctionnelles. Les analyses sont celles décrites dans la présente demande. Les résultats sont présentés dans le tableau V.

Des protéines de pois commercialisées par d'autres fabricants que la Société Demanderesse ont également été analysées en termes de propriétés fonctionnelles. Les résultats sont présentés dans le tableau VI.

Tableau V

| Lot | pH rectifié | % N6,25 /sec | Solubilité | Emulsion | | CE | Gel | |
| | | | | 4 °C | 75°C | | 4 °C | 75°C |
|---|---|---|---|---|---|---|---|---|
| A | 7,5 | 86 | 69,9 | 750 000 | 1 020 000 | 89,3 | 216 000 | 338 000 |
| B | 7,3 | 85,4 | 77,1 | 980 000 | 1 090 000 | 88,0 | 114 000 | 238 000 |
| C | 7,4 | 84,1 | 78,2 | 1 000 000 | 9 720 000 | 89,9 | 128 000 | 311 000 |
| D | 7,4 | 83,1 | 85,0 | 892 000 | 660 000 | 89,3 | 76 000 | 228 000 |
| E | 7,4 | nd | 66,7 | 1 010 000 | 802 000 | nd | 12 200 | 180 000 |
| F | 7,4 | nd | 62,9 | 766 000 | 900 000 | nd | 204 000 | 468 000 |
| G | 7,2 | 84,1 | 78,2 | 950 000 | 996 000 | 77,9 | 41 700 | 220 000 |

Tableau VI

| Design. Com. | PP CS | Propulse | Pisane M9 | Pisane HD | Pisane F9 | Pisane C9 | Envital E7 |
|---|---|---|---|---|---|---|---|
| Fabr. | Organo corp. | Nutripea LTD | Cosucra | Cosucra | Cosucra | Cosucra | Emsland |
| Matière sèche | 93,0% | 91,5% | 94,9% | 94,4% | 94,1% 99,1% | 94,1% | 91,4% |
| N6,25 / sec | 87,5% | 84,4% | 85,0% | 87,9% | 86.8% | 87,0% | 87,3% |
| Solub. / sec | 22,2% | 22,7% | 32,8% | 23,2% | 22,9% | 22,7% | 36,0% |
| CE | 0% | 60,0% | - | 57,3% | 60,0% | 57,3% | 61,3% |
| Gel tq | 195 | 220 | 26 000 | 6 180 | 1 020 | 5 000 | 225 |
| Gel 4°C | 520 | 1 320 | 120 000 | 11 880 | 5 800 | 30 000 | 2 800 |
| Gel 75°C | 32 600 | 2 600 | 300 000 | 50 000 | 144 000 | 130 000 | 130 000 |
| Gel 120°C | 18 000 | 140 000 | 165 000 | 40 000 | 100 000 | 55 000 | 55 000 |
| Emulsion tq | 5 200 | 1 600 | 850 000 | 70 000 | 425 000 | 636 000 | 636 000 |
| Emulsion 4°C | 2 120 | 1 720 | 950 000 | 114 000 | 698 000 | 790 000 | 790 000 |
| Emulsion 75°C | 2 040 | 1 920 | 880 000 | 136 000 | 500 000 | 710 000 | 710 000 |
| Emulsion 120°C | 2 000 | 3 400 | 180 000 | 30 000 | 145 000 | 150 000 | 150 000 |
| Design. Com. = Désignation commerciale ; Fabr. = Fabricant ; Solub. = Solubilité | | | | | | | |

Aucune des protéines de pois commercialisées par d'autres fabricants que la Société Demanderesse ne présente une solubilité dans l'eau, mesurée selon un test A, supérieure à 50%. Par ailleurs, aucune de ces mêmes protéines ne présente une capacité émulsifiante (CE), mesurée selon un test B, comprise entre 70% et 95%.

**EXEMPLE 7:** Fabrication de saucisses de type Francfort à partir de protéines de pois SF selon l'invention

Des saucisses de type Francfort ont été préparées en utilisant notamment des protéines de pois SF conformes à l'invention et préparées en appliquant le procédé décrit dans l'exemple 1.

A. Formule pour la fabrication de saucisses de type « francfort », émulsion fine

*Composition* (pourcentages exprimés en poids)

Maigre de porc : 30,0%
Eau /glace pillée: 26,9%
Gras de porc : 20,0%
Poitrine de porc : 18,2%
Polyphosphates de sodium: 3,0%
Sel nitrité : 1,5%
Protéine de pois SF: 1,5%
Dextrose : 1%
Glucono Delta Lactone: 0,3%
Assaisonnement : 0,3%
Total : 100,0%

B. Méthode

Hacher séparément le maigre, le gras et la poitrine de porc. Préparer un mélange avec eau (4°C), glace pillée, GDL et dextrose. Sous vide, dans un "cutter" STEPHAN refroidit à 4°C, incorporer les ingrédients en respectant l'ordre, le temps et la vitesse de cutterage ci-dessous :

Maigre de porc et polyphosphates + sel nitrité : 0 min, 1500 RPM
1/5 de la solution aqueuse : 2 min 20 s, 1500 RPM
Protéine de pois SF : 3 min, 1500 RPM
3/5 de la solution aqueuse : 3 min 20 s, 1500 RPM
Gras de porc et poitrine : 4 min 10 s, 1500 RPM
Assaisonnement : 5 min, 3000 RPM
1/5 de la solution aqueuse : 5 min 30 s, 3000 RPM
Fin T° <14°C : 9 min, 3000 RPM

Embosser les saucisses.
Cuire les saucisses dans une étuve à humidité contrôlée :

- Etuvage 20 min à 55°C - 30% HR ;
- Fumage 20 min à 55°C - 50% HR.

Cuisson à 75 °C - 100 %-HR jusque 72°C à coeur.

C. Caractérisation

Les saucisses ainsi formées ont été analysées avec un texturomètre de type INSTRON afin d'évaluer leur dureté et leur élasticité après un stockage d'une semaine à 4°C.
La fermeté ou dureté caractérise la résistance d'un matériau à la déformation plastique localisée.
L'élasticité est l'aptitude d'un matériau à reprendre sa forme initiale lorsque la déformation qui lui est imposée est supprimée.
Mobile : Poinçon plat 90*20 ; cellule de mesure : 100 N ; vitesse de traverse : 30 mm/min ; déformation imposée : 30% de la hauteur de l'échantillon. Température : 20°C

| | Petites saucisses | | | |
|---|---|---|---|---|
| | froides | | réchauffées | |
| | Dureté (N) $\pm$ 1 N | Elasticité (%) $\pm$ 5 % | Dureté (N) $\pm$ 1 N | Elasticité (%) $\pm$ 5 % |
| **Nutralys SP** | 5,7 | 65 | 3,8 | 54 |

**EXEMPLE 8:** Fabrication de fromage fondu tartinable à partir de protéines de pois SF selon l'invention, comparaison avec un fromage de même type

**A** -Un fromage fondu tartinable a été élaboré à partir de protéines de pois, SF, conformes à l'invention et préparées en appliquant le procédé décrit dans l'exemple 1 ou à partir de protéines de pois n'ayant pas été soumises au procédé de , fonctionnalisation selon l'invention (témoin S).

**FORMULE**

A. Formule

Cheddar : 32,73 %
Caséine présure: 3,50 %
Beurre : 9,06 %
JOHA S9 : 1,20 %
JOHA S4 : 1,20 %
JOHA T-Neu : 0,13 %
Protéine de pois SF ou S : 1,64 %
CLEARAM® CH3020: 2,00 %
Eau: 48,54 %
Total : 100,00 %
Matière sèche : 37,5 %

B. Méthode opératoire

- Préchauffer à 100°C le Stefan par injection de vapeur dans la double enveloppe
- Ajouter les ingrédients
- Mélanger à 300 rpm pendant 30 sec
- Mélanger à 3000 rpm jusqu'à 95°C
- Maintenir 3min à 95°C
- Conditionner

C. Analyses sensorielles

Les fromages contenant les protéines de pois SF ou S ont été présentés en aveugle à un panel de 16 dégustateurs.

Les dégustateurs se sont prononcés sur le ressenti de différences (oui / non) en terme d'odeur et de goût et il leur a fallu identifier leur fromage préféré.

| Nombre de Réponses | 16 | | | |
|---|---|---|---|---|
| Pouvez vous détecter des différences ? | Oui | Non | Sans réponse | Total |
| - sur l'odeur | 1 | 14 | 1 | 16 |
| - sur le goût | 10 | 6 | | 16 |
| Quel fromage préférez-vous ? | | | | |
| - Protéines de pois S | 1 | | | |
| - Protéines de pois SF | 11 | | | |
| - sans réponse | 4 | | | |
| - Total | 16 | | | |

Commentaires sur les produits:

- **avec les protéines SF**
  Fromage plus brillant
  Goût moins piquant, plus doux
  Goût de fromage plus marqué
  Texture plus courte
- **avec les protéines S:**

  Fromage plus jaune
  Goût plus piquant

## Revendications

1. Procédé de fabrication de protéines végétales solubles et fonctionnelles, **caractérisé en ce qu'**il comprend au moins une étape de fonctionnalisation consistant en un traitement de 0,01 à 1s constitué de :

   - une étape de chauffage de protéines végétales solubles présentant une matière sèche supérieure à 15% en poids à une température de 100°C à 160°C;
   - une étape de refroidissement desdites protéines végétales chauffées.

2. Procédé selon la revendication 1, **caractérisé en ce que** l'étape de chauffage des protéines est effectuée par échange thermique avec de la vapeur d'eau.

3. Procédé selon la revendication 1 ou 2, **caractérisé en ce que** l'étape de refroidissement des protéines chauffées est réalisée par abaissement de la pression en-dessous de 300 mbar absolu.

4. Procédé selon l'une quelconque des revendications 1 à 3, **caractérisé en ce qu'**il comprend, préalablement à l'étape de fonctionnalisation, les étapes consistant à :

   1) mettre une farine végétale en suspension dans l'eau ;
   2) extraire l'amidon et les fibres de la farine végétale en suspension de manière à obtenir une suspension protéique à 3 à 15 % de matière sèche en poids ;
   3) extraire de ladite suspension protéique un extrait de protéines de matière sèche supérieure à 15% en poids.

5. Procédé selon l'une quelconque des revendications 1 à 4, **caractérisé en ce qu'**il comprend, préalablement ou postérieurement à l'étape de fonctionnalisation, une étape consistant à rectifier le pH de l'extrait de protéines entre 6,2 et 9.

6. Procédé selon l'une quelconque des revendications 1 à 5, caractérisé en ce l'extrait de protéines soumis à l'étape de fonctionnalisation présente une teneur en protéines supérieure à 60% sur sec.

7. Procédé selon l'une quelconque des revendications 1 à 6, caractérisé en ce l'extrait de protéines soumis à l'étape de fonctionnalisation présente une viscosité à 20°C $\pm$ 2°C, mesurée selon un test E, comprise entre 10 000 mPa.s et 100 000 mPa.s ; le dit test E consiste à soit préparer une suspension protéique en incorporant 50,0 g d'échantillon dans 250,0 g d'eau distillée à 20 $\pm$ 2°C sous agitation forte pendant 2 min à une vitesse de 250 rpm et remplir une boîte de conserve avec le mélange protéines/eau ; soit, lorsque les protéines sont déjà sous forme liquide ou sous forme d'un extrait, introduire 250 ml dudit liquide ou extrait dans une boîte de conserve ; puis mesurer la viscosité du contenu de la boîte (Brookfield hélipath - vitesse de rotation : 5 rpm) à 20°C $\pm$ 2°C.

8. Procédé selon l'une quelconque des revendications 1 à 7, **caractérisé en ce qu'**il comprend en outre une étape d'atomisation des protéines végétales fonctionnelles chauffées remises en solution dans de l'eau.

9. Procédé de transformation de protéines végétales non fonctionnelles en protéines végétales fonctionnelles, **caractérisé en ce qu'**il comprend au moins une étape de fonctionnalisation consistant en un traitement de 0,01 à 1s consistant en :

- une étape de chauffage à une température de 100°C à 160°C de protéines végétales solubles présentant une matière sèche supérieure à 15% en poids;
- une étape de refroidissement des protéines végétales solubles chauffées.

**10.** Protéine végétale **caractérisée en ce qu'**elle présente

- une solubilité dans l'eau, mesurée selon un test A, supérieure à 50% ; ledit test A consiste à introduire dans un bécher de 400 ml une prise d'essai d'exactement 2,0 g d'échantillon et un barreau aimanté ; tarer le tout puis ajouter 100,0 g d'eau distillée à 20°C ± 2°C ; ajuster le pH à 7,5 avec HCl 1N ou NaOH 1N et compléter à 200,0 g exactement avec de l'eau distillée ; agiter pendant 30 minutes puis centrifuger 15 minutes à 3000 g ; prélever exactement 25,0 g de surnageant dans un cristallisoir préalablement taré et placer à l'étuve à 103°C jusqu'à masse constante ; calculer la solubilité aqueuse grâce à l'équation suivante :

$$\text{Solubilité} = \frac{(m1-m2) \times 200 \times 100}{m3 \times P}$$

avec m1 = masse en g du cristallisoir après séchage
m2 = masse en g du cristallisoir vide
m3 = masse en g de surnageant repris
P = masse en g de la prise d'essai échantillon ;

- une capacité émulsionnante, mesurée selon un test C, comprise entre 700 000 mPa.s et 1 200 000 mPa.s, préférentiellement entre 750 000 mPa.s et 1 200 000 mPa.s pour un échantillon placé à 4°C durant 24h et comprise entre 500 000 mPa.s et 1 100 000 mPa.s pour un échantillon pasteurisé à 75°C puis placé à 4°C durant 24h ; ledit test C consiste à préparer une suspension protéique en incorporant 50g d'échantillon dans 250 g d'eau distillée à 20°C ± 2°C sous agitation forte pendant 2 min à une vitesse de 250 rpm ; incorporer à la suspension 250 g d'huile de tournesol en filet en 30 secondes toujours sous agitation forte à une vitesse de 250 rpm ; laisser sous agitation durant 2,5. minutes ; ajouter 11g de sel fin de cuisine au mélange protéines/eau/huile ; poursuivre l'agitation pendant 30 secondes à 250 rpm ; remplir 3 boîtes de conserve avec le mélange protéines/eau/huile/sel ; sertir les boîtes ; placer la première boite à 4°C ± 2°C au réfrigérateur durant 24h ; pasteuriser la seconde boite 1h30 au bain-marie à 75°C ± 2°C puis placer la dans un bassin d'eau froide pendant 1h et stocker ladite boite à 4°C ± 2°C au réfrigérateur durant 24h ; stériliser la troisième boite pendant 1h en autoclave à 120°C puis placer la boite dans un bassin d'eau froide pendant 1h et stocker ladite boite à 4°C ± 2°C au réfrigérateur durant 24h ; après 24h de stockage, mesurer la viscosité de chaque boite (Brookfield hélipath - vitesse de rotation : 5 rpm) ;
- une capacité émulsifiante, mesurée selon un test B, comprise entre 70% et 95%, ledit test B consiste à préparer une solution de protéines équivalente à 2,0 % de protéines $N_{6,25}$ dans 250 ml d'eau déminéralisée dans un pot de 2 1 de forme haute (23.5 cm de haut, 11.5 cm de diamètre) ; introduire un barreau aimanté ; mélanger la solution de protéines pendant 10 minutes sur un agitateur magnétique, de marque IKA® RCT Classic, à la vitesse de 1100 t/min ; préparer 250 ml d'huile de colza alimentaire ; retirer le barreau aimanté ; plonger la broche du POLYTRON (PT 45-80) dans la solution de protéines à mi-hauteur de la solution de protéines ; positionner la vitesse de rotation à 5,5 (entre 5 et 6) soit entre 15200 et 15450 rpm ; lancer l'agitation et verser les 250 ml d'huile de colza en 1 minute ; transvider l'émulsion dans un bécher ; peser 2 fois exactement 35,0 g de l'émulsion dans 2 tubes gradués à centrifuger de 50 ml ; centrifuger à 1500 g pendant 5 minutes à 20°C ; mesurer le volume de mousse après centrifugation ; mesurer le volume total après centrifugation (culot + eau + mousse) ; vérifier la répétabilité entre les 2 tubes et entre 2 essais identiques ; déterminer par calcul la Capacité Emulsifiante grâce à l'équation suivante :

$$CE = \frac{\text{Volume de mousse après centrifugation}}{\text{Volume total après centrifugation}} \times 100$$

**11.** Protéine de pommes de terre **caractérisée en ce qu'**elle présente

- une solubilité dans l'eau, mesurée selon le test A, supérieure à 25% ;
- une capacité émulsionnante, mesurée selon le test C, comprise entre 400 000 mPa.s et 600 000 mPa.s pour un échantillon placé à 4°C durant 24h et comprise entre 500 000 mPa.s et 1 100 000 mPa.s pour un échantillon pasteurisé à 75°C puis placé à 4°C durant 24h ;
- une capacité émulsifiante, mesurée selon le test B, comprise entre 65% et 95%, préférentiellement entre 70% et 95%.

12. Protéine végétale selon la revendication 10 ou 11, **caractérisée en ce qu'**elle présente une capacité gélifiante, mesurée selon le test D, comprise entre 10 000 mPa.s et 250 000 mPa.s, préférentiellement entre 10 000 mPa.s et 50 000 mPa.s pour un échantillon placé à 4°C durant 24h et comprise entre 100 000 mPa.s et 500 000 mPa.s pour un échantillon pasteurisé à 75°C puis placé à 4°C durant 24h.

13. Protéine végétale selon l'une quelconque des revendications 10 à 12, **caractérisée en ce qu'**elle présente une teneur en protéines totales supérieure à 60% sur sec.

14. Protéine végétale selon l'une quelconque des revendications 10 à 13, **caractérisée en ce qu'**elle présente une viscosité à 20°C ± 2°C, mesurée selon le test E, supérieure ou égale à 20 000 mPa.s.

15. Protéine végétale selon l'une quelconque des revendications 10 à 14, **caractérisée en ce qu'**elle présente une teneur en hexanal inférieure à 50 ng/g et une teneur en :

- 2-methoxy-3-(1-methylpropyl)pyrazine inférieure à 15 pg/g, préférentiellement inférieure à 10 pg/g, et
- 2-methoxy-3-isopropyl-5-méthylpyrazine ou 2-methoxy-3-isopropyl-6-méthylpyrazine inférieure 15 pg/g, préférentiellement inférieure à 10 pg/g, et
- 2-methyl-3-isopropylpyrazine inférieure à 15 pg/g, préférentiellement inférieure à 10 pg/g.

16. Composition **caractérisée en ce qu'**elle comprend au moins une protéine végétale conforme à l'une quelconque des revendications 10 à 15.

17. Utilisation d'une protéine selon l'une quelconque des revendications 10 à 15 dans la fabrication d'aliments.


**Patentansprüche**

1. Verfahren zur Herstellung löslicher und funktioneller Pflanzenproteine, **dadurch gekennzeichnet, dass** es wenigstens einen Schritt der Funktionalisierung umfasst, bestehend aus einer Behandlung von 0,01 s bis 1 s, die beinhaltet:

- einen Schritt des Erhitzens löslicher Pflanzenproteine, die eine Trockenmasse von mehr als 15 Gew.-% aufweisen, auf eine Temperatur von 100°C bis 160°C;
- einen Schritt des Abkühlens besagter erhitzter Pflanzenproteine.

2. Verfahren gemäß Anspruch 1, **dadurch gekennzeichnet, dass** der Schritt des Erhitzens der Proteine durch Wärmeaustausch mit Wasserdampf durchgeführt wird.

3. Verfahren gemäß Anspruch 1 oder 2, **dadurch gekennzeichnet, dass** der Schritt des Abkühlens der erhitzten Proteine durch Verringerung des Drucks unter 300 mbar absolut erfolgt.

4. Verfahren gemäß einem der Ansprüche 1 bis 3, **dadurch gekennzeichnet, dass** es vor dem Schritt der Funktionalisierung die Schritte umfasst, bestehend aus:

1) Herstellen einer Pflanzenmehlsuspension in Wasser;
2) Extrahieren der Stärke und der Fasern aus der Pflanzenmehlsuspension, um eine Proteinsuspension mit 3 bis 15 Gew.-% Trockenmasse zu erhalten;
3) Extrahieren eines Proteinextrakts mit einer Trockenmasse von mehr als 15 Gew.-% aus besagter Proteinsuspension.

5. Verfahren gemäß einem der Ansprüche 1 bis 4, **dadurch gekennzeichnet, dass** es vor oder nach dem Schritt der Funktionalisierung einen Schritt umfasst, bestehend aus Einstellen des pH des Proteinextrakts zwischen 6,2 und 9.

6. Verfahren gemäß einem der Ansprüche 1 bis 5, **dadurch gekennzeichnet, dass** der dem Schritt der Funktionalisierung unterzogene Proteinextrakt einen Proteingehalt von mehr als 60% der Trockenmasse aufweist.

7. Verfahren gemäß einem der Ansprüche 1 bis 6, **dadurch gekennzeichnet, dass** der dem Schritt der Funktionalisierung unterzogene Proteinextrakt eine Viskosität bei 20°C ± 2°C, gemessen nach einem Test E, zwischen 10.000 mPa·s und 100.000 mPa·s aufweist; der besagte Test E besteht entweder aus Herstellen einer Proteinsuspension mittels Inkorporation von 50,0 g Probe in 250,0 g destilliert Wasser bei 20°C ± 2°C unter 2 min starkem Rühren mit einer Geschwindigkeit von 250 rpm und Befüllen einer Konservendose mit dem Protein/WasserGemisch; oder, wenn die Proteine bereits in flüssiger Form oder in Form eines Extrakts vorliegen, Einfüllen von 250 ml besagter Flüssigkeit oder Extrakt in eine Konservendose; dann Messen der Viskosität des Doseninhaltes (Brookfield Helipath - Rotationsgeschwindigkeit: 5 rpm) bei 20°C ± 2°C.

8. Verfahren gemäß einem der Ansprüche 1 bis 7, **dadurch gekennzeichnet, dass** es außerdem den Schritt der Zerstäubung der in Wasser wiedergelösten erhitzten funktionellen Pflanzenproteine umfasst.

9. Verfahren zur Umwandlung nichtfunktioneller Pflanzenproteine in funktionelle Pflanzenproteine, **dadurch gekennzeichnet, dass** es wenigstens einen Schritt der Funktionalisierung umfasst, bestehend aus einer Behandlung von 0,01 s bis 1 s, die beinhaltet:

- einen Schritt des Erhitzens löslicher Pflanzenproteine, die eine Trockenmasse von mehr als 15 Gew.-% aufweisen, auf eine Temperatur von 100°C bis 160°C,
- einen Schritt des Abkühlens besagter erhitzter löslicher Pflanzenproteine.

10. Pflanzenprotein, **dadurch gekennzeichnet, dass** es aufweist:

- eine Löslichkeit in Wasser, gemessen nach einem Test A, von größer als 50%, besagter Test A besteht aus Zugabe von genau 2,0 g Probenmenge und einem Rührfisch in ein 400 ml Becherglas, Tarieren des gesamten Ansatzes, dann Zugabe von 100,0 g destilliertem Wasser bei 20°C ± 2°C, Einstellen des pH auf 7,5 mit 1N HCl oder 1N NaOH und Auffüllen mit destilliertem Wasser auf genau 200,0 g; 30 min Rühren, dann 15 min mit 3000 g zentrifugieren; genau 25,0 g Überstand in einen zuvor tarierten Kristallisator geben und diesen in einen Trockenofen bei 103°C bis zur Gewichtskonstanz stellen, Berechnen der Löslichkeit in Wasser mithilfe der folgenden Gleichung:

$$\text{Löslichkeit} = \frac{(m1-m2) \times 200 \times 100}{m3 \times P}$$

wobei m1 = Gewicht des Kristallisators nach Trocknung in Gramm
m2 = Gewicht des leeren Kristallisators in Gramm
m3 = Gewicht des entnommenen Überstands in Gramm
P = Gewicht der Probenmenge in Gramm;

- ein Emulsionsvermögen, gemessen nach einem Test C, zwischen 700.000 mPa·s und 1.200.000 mPa·s, bevorzugt zwischen 750.000 mPa·s und 1.200.000 mPa·s für eine Probe, die 24 h bei 4°C aufbewahrt wird, und zwischen 500.000 mPa·s und 1.100.000 mPa·s für eine Probe, die bei 75°C pasteurisiert und dann 24 h bei 4°C aufbewahrt wird; besagter Test C besteht aus Herstellen einer Proteinsuspension mittels Inkorporation von 50 g Probe in 250 g destilliertes Wasser bei 20°C ± 2°C unter 2 min starkem Rühren mit einer Geschwindigkeit von 250 rpm; Zugabe von 250 g Sonnenblumenöl in einem dünnen Strahl innerhalb von 30 Sekunden unter ständigem starkem Rühren mit einer Geschwindigkeit von 250 rpm; dann weitere 2,5 h Rühren; Zugabe von 11 g feinem Kochsalz zur Protein/Wasser/Öl-Mischung, dann weitere 30 Sekunden Rühren mit 250 rpm; Befüllen von 3 Konservendosen mit der Protein/Wasser/Öl/Salz-Mischung; Verschließen der Dosen; Aufbewahren der ersten Dose im Kühlschrank 24 h bei 4°C ± 2°C; Pasteurisieren der zweiten Dose im Wasserbad bei 75°C ± 2°C in 1h 30 min, dann Verbringen der Dose in ein Kaltwasserbad 1 h und Lagerung besagter Dose 24 h bei 4°C ± 2°C im Kühlschrank; Sterilisieren der dritten Dose in einem Autoklaven in 1 h bei 120°C, dann Verbringen der Dose in ein Kaltwasserbad 1 h und Lagerung besagter Dose 24 h bei 4°C ± 2°C im Kühlschrank; nach 24 h Lagerung wird die Viskosität jeder Dose gemessen (Brookfield Helipath - Rotationsgeschwindigkeit:

5 rpm);

- ein Emulgiervermögen, gemessen nach einem Test B, zwischen 70% und 95%, besagter Test B besteht aus Herstellen einer Proteinlösung, die 2,0% $N_{6,25}$-Proteinen entspricht, in 250 ml demineralisiertem Wasser in einem hochwandigen 2 l Gefäß (Höhe 23,5 cm, Durchmesser 11,5 cm); Zugabe eines Rührfisches; 10 Minuten Mischen der Proteinlösung auf einem Magnetrührer mit Markenbezeichnung IKA® RCT Classic mit einer Geschwindigkeit von 1100 t/min; Zubereitung von 250 ml Rapsspeiseöl; Entnehmen des Rührfisches; Eintauchen der POLYTRON Spindel (PT 45-80) in die Proteinlösung bis zur halben Füllhöhe der Proteinlösung; Einstellen der Rotationsgeschwindigkeit auf 5,5 (zwischen 5 und 6) oder zwischen 15200 und 15450 rpm; Anstellen des Rührers und Eingießen der 250 ml Rapsöl innerhalb 1 Minute; Umfüllen der Emulsion in ein Becherglas; Einwiegen von jeweils genau 35,0 g Emulsion in zwei graduierte 50 ml Zentrifugenröhrchen; mit 1500 g 5 Minuten bei 20°C zentrifugieren; Messen des Schaumvolumens nach Zentrifugation; Messen des Gesamtvolumens nach Zentrifugation (Unterstand + Wasser + Schaum); Überprüfen der Reproduzierbarkeit zwischen den beiden Röhrchen und den 2 identischen Versuchen, rechnerische Bestimmung des Emulgiervermögens mithilfe der folgenden Gleichung:

$$\text{Emulgiervermögen (CE)} = \frac{\text{Schaumvolumen nach Zentrifugation}}{\text{Gesamtvolumen nach Zentrifugation}} \times 100$$

11. Kartoffelprotein, **dadurch gekennzeichnet, dass** es aufweist

- eine Löslichkeit in Wasser, gemessen nach Test A, von größer als 25%;
- ein Emulsionsvermögen, gemessen nach Test C, zwischen 400.000 mPa·s und 600.000 mPa·s für eine Probe, die 24 h bei 4°C aufbewahrt wird, und zwischen 500.000 mPa.s und 1.100.000 mPa·s für eine Probe, die bei 75°C pasteurisiert und 24 h bei 4°C aufbewahrt wird;
- ein Emulgiervermögen, gemessen nach Test B, zwischen 65% und 95%, bevorzugt zwischen 70% und 95%.

12. Pflanzenprotein gemäß Anspruch 10 oder 11, **dadurch gekennzeichnet, dass** es ein Gelbildungsvermögen, gemessen nach Test D, zwischen 10.000 mPa·s und 250.000 mPa·s, bevorzugt zwischen 10.000 mPa·s und 50.000 mPa·s, für eine Probe, die 24 h bei 4°C aufbewahrt wird, und zwischen 100.000 mPa·s und 500.000 mPa·s für eine Probe aufweist, die bei 75°C pasteurisiert und anschließend 24 h bei 4°C aufbewahrt wird.

13. Pflanzenprotein gemäß einem der Ansprüche 10 bis 12, **dadurch gekennzeichnet, dass** es einen Gesamtproteingehalt von mehr als 60% der Trockenmasse aufweist.

14. Pflanzenprotein gemäß einem der Ansprüche 10 bis 13, **dadurch gekennzeichnet, dass** es eine Viskosität bei 20°C ± 2°C, gemessen nach Test E, von größer oder gleich 20.000 mPa·s s aufweist.

15. Pflanzenprotein gemäß einem der Ansprüche 10 bis 14, **dadurch gekennzeichnet, dass** es einen Gehalt an Hexanal von kleiner als 50 ng/g und einen Gehalt an:

- 2-Methoxy-3-(1-methylpropyl)pyrazin von kleiner als 15 pg/g, bevorzugt kleiner als 10 pg/g, und
- 2-Methoxy-3-isopropyl-5-methylpyrazin oder 2-Methoxy-3-isopropyl-6-methylpyrazin von kleiner als 15 pg/g, bevorzugt kleiner als 10 pg/g, und
- 2-Methyl-3-isopropylpyrazin von kleiner als 15 pg/g, bevorzugt kleiner als 10 pg/g, aufweist.

16. Zusammensetzung, **dadurch gekennzeichnet, dass** sie wenigstens ein Pflanzenprotein umfasst, das einem der Ansprüche 10 bis 15 entspricht.

17. Verwendung eines Proteins gemäß einem der Ansprüche 10 bis 15 bei der Herstellung von Nahrungsmitteln.

**Claims**

1. A process for manufacturing soluble and functional plant proteins, **characterized in that** it comprises at least one functionalization step consisting of a treatment of 0.01 to 1 s consisting of:

- a step of heating soluble plant proteins with a solids content of greater than 15% by weight to a temperature of 100°C to 160°C;
- a step of cooling said heated plant proteins.

2. The process as claimed in claim 1, **characterized in that** the protein heating step is performed by heat exchange with water vapour.

3. The process as claimed in claim 1 or 2, **characterized in that** the step of cooling of the heated protein is performed by lowering the pressure below 300 mbar absolute.

4. The process as claimed in any one of claims 1 to 3, **characterized in that** it comprises, prior to the functionalization step, the steps consisting in:

   1) suspending a plant flour in water;
   2) extracting the starch and the fibre from the plant flour in suspension so as to obtain a protein suspension with a solids content of 3% to 15% by weight;
   3) extracting from said protein suspension a protein extract with a solids content of greater than 15% by weight.

5. The process as claimed in any one of claims 1 to 4, **characterized in that** it comprises, before or after the functionalization step, a step consisting in rectifying the pH of the protein extract to between 6.2 and 9.

6. The process as claimed in any one of claims 1 to 5, **characterized in that** the protein extract subjected to the functionalization step has a protein content of greater than 60% on a dry basis.

7. The process as claimed in any one of claims 1 to 6, **characterized in that** the protein extract subjected to the functionalization step has a viscosity at 20°C ± 2°C, measured according to a test E, of between 10 000 mPa.s and 100 000 mPa.s, said test E consisting in either preparing a protein suspension by incorporating 50.0 g of sample in 250.0 g of distilled water at 20°C ± 2°C with vigorous stirring for 2 minutes at a speed of 250 rpm and filling a storage jar with the protein/water mixture; or, when the proteins are already in liquid form or in the form of an extract, placing 250 ml of said liquid or extract in a storage jar; then measuring the viscosity of the contents of the jar (Brookfield helipath - stirring speed: 5 rpm) at 20°C ± 2°C.

8. The process as claimed in any one of claims 1 to 7, **characterized in that** it also comprises a step of atomization of the heated functional plant protein redissolved in water.

9. A process for transforming non-functional plant protein into functional plant protein, **characterized in that** it comprises at least one functionalization step that consists of a treatment for 0.01 to 1 s consisting of:

   - a step of heating soluble plant protein with a solids content of greater than 15% by weight to a temperature of 100°C to 160°C;
   - a step of cooling of the heated soluble plant protein.

10. A plant protein, **characterized in that** it has

   - a water solubility, measured according to a test A, of greater than 50%; said test A consisting in placing in a 400 ml beaker a test sample of exactly 2.0 g and a magnetic bar; taring the and then adding 100.0 g of distilled water at 20°C ± 2°C ; adjusting the pH to 7.5 with 1N HCl or 1N NaOH and making up to exactly 200.0 g with distilled water; stirring for 30 minutes and then centrifuging for 15 minutes at 3000 x g; withdrawing exactly 25.0 g of supernatant into a pretared crystallizing dish and placing the dish in an oven at 103°C to constant mass; calculating the water solubility by means of the following equation:

$$\text{Solubility} = \frac{(m1-m2) \times 200 \times 100}{m3 \times P}$$

with m1 = mass in g of the crystallizing dish after drying

m2 = mass in g of the empty crystallizing dish
m3 = mass in g of the supernatant taken up
P = mass in g of the test sample;

- an emulsion capacity, measured according to a test C, of between 700 000 mPa.s and 1 200 000 mPa.s and preferentially between 750 000 mPa.s and 1 200 000 mPa.s for a sample placed at 4°C for 24 hours, and between 500 000 mPa.s and 1 100 000 mPa.s for a sample pasteurized at 75°C and then placed at 4°C for 24 hours; said test C consisting in preparing a protein suspension by incorporating 50 g of sample in 250 g of distilled water at 20°C $\pm$ 2°C with vigorous stirring for 2 minutes at a speed of 250 rpm; incorporating into the suspension 250 g of sunflower oil as a trickle over 30 seconds with continued vigorous stirring at a speed of 250 rpm; leaving to stir for 2.5 minutes; adding 11 g of fine cooking salt to the protein/water/oil mixture; continuing stirring for 30 seconds at 250 rpm; filling 3 storage jars with the protein/water/oil/salt mixture; crimping seal the jars; placing the first jar at 4°C $\pm$ 2°C in a refrigerator for 24 hours; pasteurizing the second jar for 1 h 30 minutes on a water bath at 75°C $\pm$ 2°C and then placing it in a cold water bath for 1 hour and storing said jar at 4°C $\pm$ 2°C in a refrigerator for 24 hours; sterilizing the third jar for 1 hour in an autoclave at 120°C and then placing the jar in a bath of cold water for 1 hour and store said jar at 4°C $\pm$ 2°C in a refrigerator for 24 hours; after 24 hours of storage, measuring the viscosity of each jar (Brookfield helipath - stirring speed: 5 rpm);
- an emulsifying capacity, measured according to a test B, of between 70% and 95%, said test B consisting in preparing a protein solution equivalent to 2.0% of proteins $N_{6.25}$ in 250 ml of demineralized water in a high-sided 2 1 jar (23.5 cm deep, 11.5 cm in diameter), introducing a magnetic bar, mixing the protein solution for 10 minutes on a magnetic stirrer of IKA® RCT Classic brand, at a speed of 1100 rpm, preparing 250 ml of food-grade rapeseed oil, removing the magnetic bar, immersing the Polytron dispersing aggregate (PT 45-80) in the protein solution to mid-height of the protein solution, setting the stirring speed to 5.5 (between 5 and 6), i.e. between 15 200 and 15 450 rpm, starting the stirring and pouring in the 250 ml of rapeseed oil over 1 minute, transferring the emulsion into a beaker, weighing out twice exactly 35.0 g of the emulsion in two 50 ml graduated centrifuge tubes, centrifuging at 1500 $\times$g for 5 minutes, at 20°C, measuring the volume of the foam after centrifugation, measuring the total volume after centrifugation (pellet + water + foam), checking the repeatability between the two tubes and between two identical tests, determining by calculation the Emulsifying Capacity by means of the following equation:

$$EC = \frac{\text{Volume of foam after centrifugation}}{\text{Total volume after centrifugation.}} \times 100$$

11. A potato protein, **characterized in that** it has

- a water solubility, measured according to the test A, of greater than 25%;
- an emulsion capacity, measured according to the test C, of between 400 000 mPa.s and 600 000 mPa.s for a sample placed at 4°C for 24 hours, and between 500 000 mPa.s and 1 100 000 mPa.s for a sample pasteurized at 75°C and then placed at 4°C for 24 hours;
- an emulsifying capacity, measured according to the test B, of between 65% and 95% and preferentially between 70% and 95%.

12. The plant protein as claimed in claim 10 or 11, **characterized in that** it has a gel capacity, measured according to the test D, of between 10 000 mPa.s and 250 000 mPa.s and preferentially between 10 000 mPa.s and 50 000 mPa.s for a sample placed at 4°C for 24 hours, and between 100 000 mPa.s and 500 000 mPa.s for a sample pasteurized at 75°C and then placed at 4°C for 24 hours.

13. The plant protein as claimed in any one of claims 10 to 12, **characterized in that** it has a total protein content of greater than 60% on a dry basis.

14. The plant protein as claimed in any one of claims 10 to 13, **characterized in that** it has a viscosity at 20°C $\pm$ 2°C, measured according to the test E, of greater than or equal to 20 000 mPa.s.

15. The plant protein as claimed in any one of claims 10 to 14, **characterized in that** it has a hexanal content of less than 50 ng/g and a content of:

- 2-methoxy-3-(1-methylpropyl)pyrazine of less than 15 pg/g and preferentially less than 10 pg/g, and
- 2-methoxy-3-isopropyl-5-methylpyrazine or 2-methoxy-3-isopropyl-6-methylpyrazine of less than 15 pg/g and preferentially less than 10 pg/g, and
- 2-methyl-3-isopropylpyrazine of less than 15 pg/g and preferentially less than 10 pg/g.

16. A composition, **characterized in that** it comprises at least one plant protein in accordance with any one of claims 10 to 15.

17. The use of a protein as claimed in any one of claims 10 to 15 in the manufacture of foods.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2489208 A
- US 3889001 A
- US 3857966 A
- US 3876806 A
- EP 0013093 A
- FR 2202652
- EP 0522800 A
- US 4530788 A

**Littérature non-brevet citée dans la description**

- **KLEPACKA et al.** Effect of heat treatment on chemically modified proteins of legume seeds. *Food chem.,* 1997, vol. 58, 219-22
- **DUMAS A.** *Annales de chimie et de physique,* vol. 183 (2.47), 198-213
- **BUCKEE.** *Journal of the Institute of Brewing,* 1994, vol. 100, 57-64